# DEMANDE DE BREVET EUROPEEN

(11) **EP 2 397 951 A1**
(43) Date de publication de la demande: **21.12.2011**
(21) Numéro de dépôt: 11169748.8
(22) Date de dépôt: 14.06.2011
(51) Int. Cl.: G06F 17/27, H04L 12/58, G06Q 10/00, H04M 1/725

(54) **Procédé et système de gestion des interactions utilisateur via une messagerie instantanée**

(30) Priorité: 17.06.2010 FR 1002567
(71) Demandeur: Alcatel Lucent, 75007 Paris (FR)
(72) Inventeur: Maag, Maria Laura, 91620 NOZAY (FR); Hacid, Hakim, 91620 NOZAY (FR)
(74) Mandataire: Shamsaei Far, Hassan

(57) **Abrégé**

Procédé de gestion des interactions d'un utilisateur (1) avec au moins deux correspondants (2-4), via au moins deux fenêtres de conversation (12-14) d'une application cliente à une messagerie instantanée, ce procédé comprenant
- une étape de récupération d'un message (121 , 131, 141) à envoyer, par l'utilisateur (1), depuis une fenêtre de conversation (12-14);
- une étape d'analyse sémantique du message (121 , 131, 141) récupéré ;
- une étape de calcul des distances sémantiques séparant le message (121, 131, 141) analysé, respectivement, des conversations de l'utilisateur (1) avec ses correspondants (2-4) ;
- une étape de sélection d'un correspondant (2-4) estimé le correspondant auquel est destiné le message (121, 131, 141) analysé.

## Description

La présente invention concerne les messageries instantanées.

On désigne, ci-après, par « une messagerie instantanée» tout dispositif informatique permettant l'échange instantané d'au moins des messages textuels entre plusieurs terminaux (ordinateurs, PDA, téléphone portable par exemples) distants et connectés à un même réseau, le plus communément celui d'Internet. On en cite, à titre d'exemples non exhaustifs, Trillian^{TM}, ICQ^{TM}, Google Talk^{TM}, MSN ^{TM} Web Messenger, My Teamwork^{TM} (édité par Alcatel-Lucent), My Instant Communicator^{TM}, Skype^{TM}, Windows Live Messenger^{TM}, Microsoft Office Communicator^{TM}, Yahoo! Messenger^{TM}. En évoluant, la plupart des messageries instantanées intègre, en outre,
- des modes de communications variés comprenant la voix, la vidéo ou toutes sortes d'applications collaboratives (tableau blanc partagé, partage de fichiers, jeux en ligne) ; et
- des services tels que le service de présence capable de soutenir la mise en relation des correspondants distants.

L'emploi d'une messagerie instantanée requiert l'utilisation d'un logiciel, d'une interface web, ou plus généralement d'une application cliente qui se connecte à un serveur de messagerie instantanée. Cette application cliente
- s'articule, généralement, autour d'une liste de contacts (buddy list en anglais) préalablement enregistrés ; et
- autorise la conduite d'échanges conversationnels écrits avec ces contacts.

On entend ici par « contact » un identifiant (un pseudonyme, une photo, un nom/prénom, ou une adresse électronique par exemple) d'un correspondant ayant un compte auprès d'une messagerie instantanée. Les utilisateurs des messageries instantanées ont ainsi, généralement, un compte défini par un identifiant et éventuellement un mot de passe.

En effet, un utilisateur d'une messagerie instantanée peut sélectionner un (ou plusieurs) correspondant(s) de sa liste de contacts et ouvrir une fenêtre de conversation (aussi dite fenêtre d'écriture, de dialogue, ou de « chat ») dans laquelle il peut saisir un message destiné à ce correspondant. En le validant (c.à.d. en appuyant sur un bouton « envoyer » par exemple), le message saisi est transmis, et donc apparaît dans la fenêtre de conversation à l'écran du correspondant. Notamment, un utilisateur peut inviter d'autres correspondants, à partir de sa liste de contacts, pour interagir dans une même session de messagerie instantanée déjà ouverte dans une fenêtre de conversation. Les interactions des différents participants dans cette session apparaissent pour chacun dans une seule fenêtre de conversation, généralement sous la forme de fil d'écriture.

Avantageusement, la plupart des messageries instantanées permettent un engagement simultané dans plusieurs conversations avec plusieurs contacts via, respectivement, plusieurs fenêtres de conversation. Autrement dit, elles permettent des interactions concomitantes avec plus d'un correspondant via plus d'une fenêtre de conversation.

Cependant, à l'encontre des salons de discussion publics (tels que IRC pour Internet Relay Chat, ou les forums de discussion), les fenêtres de conversation des messageries instantanées sont à caractère privé. Elles ne sont visibles et/ou accessibles qu'aux partenaires conjointement concernés par cette conversation. Il en résulte qu'un utilisateur engagé dans plus d'une conversation, et donc ayant ouvert plus d'une fenêtre de conversation, veille à ce qu'un message qu'il saisit soit dans la bonne fenêtre afin qu'il soit transmis au(x) contact(s) souhaité(s).

De ce fait, un utilisateur, interagissant via plus d'une fenêtre de conversation, peut se voir obligé de prendre garde à vérifier régulièrement et surtout lors de chaque changement d'une fenêtre de conversation à une autre, qu'il saisit son message dans la fenêtre de conversation correspondante au contact qu'il souhaite lui faire parvenir ce message. A défaut, l'utilisateur risque par mégarde d'envoyer un message à un contact alors que ce message est destiné à un autre contact. Autrement dit, il se peut qu'un message destiné à un certain contact soit envoyé par erreur à un autre. Ce genre de maladresse est sans doute embarrassante pour l'expéditeur ainsi que le destinataire. A titre d'exemples illustratifs, on cite :
- l'envoi d'un message personnel à un contact professionnel (un collègue de travail par exemple) alors qu'il est destiné à un contact personnel (un membre de la famille par exemple) ;
- l'envoi d'un message en français lors d'une conversation en anglais ;
- l'envoi de la réponse à une requête client (auprès d'un service client, ou un centre d'appels par exemple) à un client différent du requérant.

Une telle erreur peut avoir un effet indésirable (la qualité de service rendue par un centre d'appels, la divulgation d'une prise de position par exemple).

Par conséquent, un utilisateur engagé dans plusieurs conversations via une pluralité de fenêtres de conversation est contraint de doubler son attention qui doit aussi augmenter avec le nombre des fenêtres de conversation via lesquelles il est train d'interagir. Notamment, ceci a pour effet d'occuper/perturber l'utilisateur.

La gestion simultanée d'une pluralité de conversations via plus d'une fenêtre de conversation engendre, dans la pratique, plusieurs problèmes.

L'utilisation de figures distinctives visibles entre les fenêtres de conversations ouvertes (fond de la fenêtre, taille/couleur du texte par exemple) résout partiellement ces problèmes, vu qu'elle requiert, en outre, la mémorisation des correspondances figure distinctive ― correspondant.

Un objet de la présente invention est de remédier aux inconvénients précités.

Un autre objet de la présente invention est d'éviter l'envoi d'un message à un contact auquel le message ne lui est pas destiné.

Un autre objet de la présente invention est d'assister l'utilisateur dans ses interactions via un moyen de messagerie instantanée.

Un autre objet de la présente invention est de veiller au bon déroulement d'une pluralité de conversations simultanées via une messagerie instantanée.

Un autre objet de la présente invention est d'assister l'utilisateur d'une manière transparente en n'intervenant qu'en cas d'un message envoyée à un correspondant autre que celui auquel il est destiné.

Un autre objet de la présente invention est d'améliorer le service rendu par les moyens de messagerie instantanée.

A cette fin, l'invention se rapporte, selon un premier aspect, à un procédé de gestion des interactions d'un utilisateur avec au moins deux correspondants, via au moins deux fenêtres de conversation d'une application cliente à une messagerie instantanée, ce procédé comprenant
- une étape de récupération d'un message à envoyer, par l'utilisateur, depuis une fenêtre de conversation;
- une étape d'analyse sémantique du message récupéré ;
- une étape de calcul des distances sémantiques séparant le message analysé, respectivement, des conversations de l'utilisateur avec ses correspondants ;
- une étape de sélection d'un correspondant estimé le correspondant auquel est destiné le message analysé.

L'invention se rapporte, selon un deuxième aspect, à un système de gestion des interactions d'un utilisateur avec au moins deux correspondants, via au moins deux fenêtres de conversation d'une application cliente à une messagerie instantanée, ce système comprenant :
- un analyseur sémantique configuré pour récupérer un message à envoyer, par l'utilisateur, depuis une fenêtre de conversation, et pour en effectuer une analyse sémantique ;
- un calculateur de proximité sémantique configuré pour calculer les distances sémantiques séparant le message analysé, respectivement, des conversations de l'utilisateur avec ses correspondants, et pour sélectionner un correspondant estimé le correspondant auquel est destiné le message analysé.

L'invention se rapporte, selon un troisième aspect, à un produit programme d'ordinateur implémenté sur un support mémoire, susceptible d'être mis en oeuvre au sein d'une unité de traitement informatique et comprenant des instructions pour la mise en oeuvre du procédé résumé ci-dessus.

D'autres caractéristiques et avantages de l'invention apparaîtront plus clairement et de manière concrète à la lecture de la description ci-après de modes de réalisation préférés, laquelle est faite en référence aux dessins annexés dans lesquels :
- la figure 1 illustre schématiquement le contexte d'application d'un mode de réalisation ;
- la figure 2 illustre schématiquement une représentation fonctionnelle non limitative d'un mode de réalisation ;
- la figure 3 affiche un exemple illustratif d'un mode de réalisation.

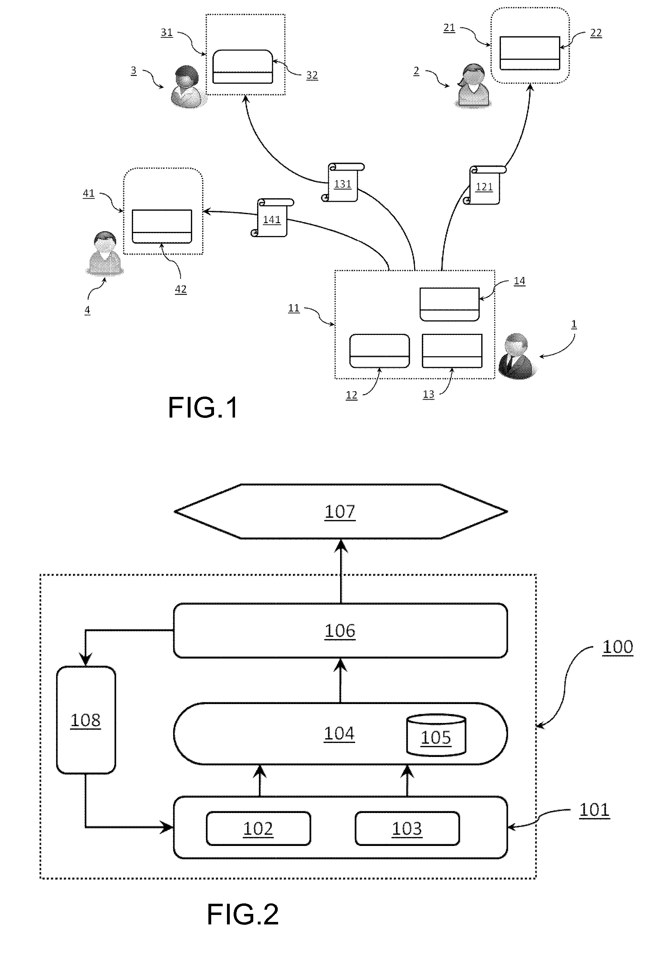

Dans la présente description du procédé et du système de gestion d'interaction utilisateur via une messagerie instantanée - faite en référence, dans un premier temps, à la figure 1 - on part de l'hypothèse qu'un utilisateur 1 est connecté, via une application cliente comprise dans son terminal utilisateur 11, à une messagerie instantanée et est en interaction avec une pluralité de correspondants 2-4. Ces correspondants 2-4 sont, également, connectés via des applications clientes comprises dans leurs terminaux utilisateurs 21, 31, 41 respectifs. Un ordinateur (mobile/fixe), un Smartphone, un PDA, un téléphone IP sont des exemples des terminaux utilisateur 11, 21, 31, 41.

Il est à noter qu'une application cliente à une messagerie instantanée peut être
- un logiciel installé sur un terminal utilisateur (My Teamwork^{TM}, My Instant Communicator^{TM}, Trillian^{TM}, Skype^{TM}, Windows Live Messenger^{TM}, Microsoft Office Communicator^{TM}, Google Talk^{TM} par exemple) ;
- une page WEB (MSN ^{TM} Web Messenger, une page Web permettant à des clients d'établir des conversations écrites quasi-instantanées avec le service client d'une enseigne commerciale par exemple) ; ou plus généralement
- une application informatique (une plateforme de communication par messagerie instantanée utilisée par un centre d'appels pour répondre aux requêtes clients par exemple).

L'utilisateur 1 interagit avec ses correspondant 2-4, respectivement, via les fenêtres de conversation 12-14 ouvertes de l'application cliente à une messagerie instantanée. Comme indiqué sur la figure 1, une fenêtre de conversation 12-14, 22, 32, 42 comprend, généralement, une zone d'écriture et une zone d'affichage des messages échangés.

Les interactions de l'utilisateur 1 avec ses correspondants 2-4 via la messagerie instantanée comprend notamment
- l'envoi d'un message 121, 131, 141 (un contenu textuel, un lien hypertexte, une adresse électronique par exemple) saisi et/ou apporté dans les fenêtres de conversation 12-14 ;
- l'envoi d'un objet multimédia 121, 131, 141 (une photo, un émoticône, ou plus généralement un fichier par exemple) ;
- le lancement d'une commande 121, 131, 141 (inviter à joindre une conférence, partager des photos, lancer un jeu, appeler, démarrer une conversation vidéo en activant la webcam par exemple).

A titre d'exemple illustratif d'interactions de l'utilisateur 1 avec ces correspondants 2-4, lorsqu'il saisit ensuite valide un message 121 (respectivement, 131, 141) dans la fenêtre de conversation 12 (respectivement, 13, 14), ce message 121 (respectivement, 131, 141) instantanément apparaît dans la fenêtre de conversation 22 (respectivement, 32, 42) du correspondant 2 (respectivement, 3, 4). Les messages échangés sont, généralement, conservés le temps que les fenêtres de conversation 12-14, 22, 32, 42 restent ouvertes. Généralement, les messages de tous les participants dans une même conversation de messagerie instantanée s'empilent dans leurs fenêtres de conversation respectives. En outre, les messages échangés sont généralement sauvegardés, pour chaque utilisateur 1-4, dans leurs historiques de conversations respectifs.

Afin d'éviter l'envoi d'un message à un correspondant autre qu'auquel il est destiné, un mode de réalisation introduit dans l'application cliente un système de gestion des interactions utilisateur via la messagerie instantanée. Ce système est chargé d'assister l'utilisateur 1 dans ses multiples conversations simultanées ouvertes dans les fenêtres de conversation 12-14. Il permet, à titre d'exemple, d'éviter d'envoyer par mégarde le message 121, qui est a priori destiné au correspondant 2, au correspondant 3 ou 4.

Pour cela, le système de gestion des interactions utilisateur via la messagerie instantanée procède, au moins,
- à la récupération du message 121 (ou équivalemment, 131, 141) à envoyer par l'utilisateur 1 (c.à.d. avant que ce message 121 ne soit effectivement envoyé) ;
- à une analyse sémantique de ce message 121;
- à une analyse conversationnelle des interactions de l'utilisateur 1 avec ses correspondants 2-4 ;
- à un calcul des distances sémantiques séparant ce message 121 à envoyer, respectivement, des conversations en cours ou passées avec les correspondants 2-4 ;
- à la détermination d'un correspondant 2-4 estimé le correspondant auquel est destiné ce message 121 ;
- au routage (envoi) de ce message 121 vers l'un des correspondants 2-4 en fonction des distances sémantiques calculés et/ou des choix de l'utilisateur 1.

Avantageusement, l'analyse sémantique du message 121 comprend deux étapes, à savoir :
- une étude de forme (ou structurale) permettant d'obtenir une description structurale de la conversation. Cette description peut comprendre, à titre d'exemples non-limitatifs, la langue, la longueur du message, les ponctuations expressives (écriture en majuscule/minuscule, utilisation d'un point d'interrogation dans une question, démultiplication d'un même caractère);
- une étude de fond (ou sémantique) permettant de déduire la sémantique du message telle que, par exemples, l'objet du message, le registre de langue, l'interprétation des abréviations/acronymes, la syntaxe, le protocole de communication.

Cette analyse sémantique vise notamment à différencier au mieux possible les conversations en cours de l'utilisateur 1 avec ses correspondants 2-4.

Dans un mode de réalisation, l'analyse conversationnelle des interactions de l'utilisateur 1 avec ses correspondants 2-4 fournit des nuages sémantiques (notamment, « semantic cloud » en anglais) de tags (ou de mots clés) caractéristiques de ces interactions. Cette analyse conversationnelle permet, ainsi, d'obtenir une image sémantique de chacune des conversations de l'utilisateur 1 avec ses correspondants 2-4. De préférence, le nuage sémantique de tags est un condensé sémantique des termes et des concepts caractéristiques d'une conversation. Ces termes et concepts sont dotés d'au moins une métrique permettant de faire ressortir leurs importances dans cette conversation.

L'analyse conversationnelle peut, notamment, porter sur les interactions de l'utilisateur 1 avec son correspondant 2-4
- affichées dans la fenêtre de conversation 12-14 ;
- datant de moins d'une heure, d'une semaine, ou d'un mois par exemple,
- comprises dans son historique de conversation avec ce correspondant 2-4.

Dans un autre mode de réalisation, l'analyse conversationnelle des interactions de l'utilisateur 1 avec son correspondant 2-4 ne concerne que les interactions entreprises depuis un même endroit (le lieu de travail, la maison par exemple). Cet endroit peut être déduit à partir, par exemple, de l'adresse IP affectée au terminal utilisateur 11, ou du nom du réseau auquel est connecté l'utilisateur 1 (réseau de la maison, WLAN hotspots public par exemple).

De préférence, l'analyse conversationnelle utilise l'analyse sémantique précédemment faite pour les messages envoyés aux correspondants 2-4 adéquats.

Le calcul des distances sémantiques séparant le message 121 , 131, 141 à envoyer, respectivement, des conversations en cours ou passées de l'utilisateur 1 avec ses correspondants 2-4 permet de déterminer la conversation la plus proche sémantiquement du message 121, 131, 141 à envoyer.

Différentes techniques de mesure de la distance sémantique sont décrites, par exemple, dans (M.Z MAALA, et al., « Distance sémantique entre concepts définis en ALE », publié dans Langages et Modèles à Objets 07 Toulouse, 2007). Une mesure de la similarité sémantique ou du degré de relation sémantique peut être aussi utilisée.

Dès lors que la conversation la plus proche sémantiquement du message 121, 131, 141 à envoyer est déterminée, ce message 121, 131, 141 sera donc, transmis (ou routé) vers le correspondant 2-4 engagé dans cette conversation.

De préférence, le message 121, 131, 141 n'est transmis au correspondant 2-4 estimé qu'après la confirmation de l'utilisateur 1, obtenue par le biais d'une interface graphique qui lui est affichée.

Dans un mode de réalisation, le message 121, 131, 141 à envoyer peut être directement transmis au correspondant 2-4 estimé, c.à.d. sans consulter l'utilisateur 1, lorsque la distance sémantique entre le message 121, 131, 141 à envoyer et la conversation relative à un correspondant 2-4 est nulle et/ou négligeable par rapport aux distances sémantiques la séparant des autres conversations.

Dans une mise en oeuvre illustrée sur la figure 2, le système 100 de gestion des interactions utilisateur via une messagerie instantanée comprend :
- un analyseur sémantique 101 , configuré pour récupérer tout message 121, 131, 141 à envoyer par l'utilisateur 1 (c.à.d. juste avant son envoi à un correspondant 2-4) pour en effectuer une étude structurelle à l'aide du module 102 et une étude sémantique à l'aide du module 103;
- un calculateur 104 de proximité sémantique permettant de trouver, au vu de l'analyse sémantique qui lui est communiquée par l'analyseur sémantique 101, une correspondance entre le message récupéré 121, 131, 141 et les conversations en cours entre l'utilisateur 1 et ses correspondants 2-4. Pour cela, le calculateur 104 de proximité sémantique est pourvu de métadonnées 105 comprenant au moins des informations concernant les conversations en cours dans les fenêtres de conversation 12-14. Le calculateur 104 de proximité sémantique permet de déterminer la conversation (et donc, le correspondant 2-4) la plus proche sémantiquement du message 121, 131, 141 à envoyer par l'utilisateur 1 ;

- un gestionnaire 106 de messages permettant de router le message 121, 131, 141 à envoyer au correspondant 2-4 sélectionné par le calculateur 104 de proximité sémantique en l'apportant dans la fenêtre de conversation 12-14 correspondante, et subséquemment la transmettant au correspondant 2-4 engagé dans cette conversation. Il en résulte que le message 121, 131, 141 est introduit dans la bonne conversation 107. Dans un mode de réalisation, le gestionnaire 106 de messages requière, tout d'abord, via une interface graphique utilisateur, la confirmation ou la modification du correspondant sélectionné par le calculateur 104 de proximité sémantique ;
- un module de feedback 108 étant agencé pour retourner le choix sélectionné par l'utilisateur 1 (confirmer, choisir un autre correspondant que celui sélectionné par le calculateur 104 de proximité sémantique). Ce mécanisme de feedback vise notamment l'apprentissage automatique, par l'analyseur sémantique 101, des choix de l'utilisateur. Autrement dit, si l'utilisateur 1 modifie un correspondant estimé par le système 100, cette information est retournée à l'analyseur sémantique 101 pour en tenir compte dans ses prochaines analyses.

De préférence, l'analyseur sémantique 101 utilise des métadonnées d'ontologies (telles que celles de WordNet®, SentiWordNet®, ConceptNet®), et/ou de vocabulaire.

Dans un mode de réalisation, les métadonnées 105 comprennent
- l'historique de toutes les conversations auxquelles l'utilisateur 1 a été engagé (l'historique des requêtes/réponses clients dans le cas d'un centre d'appels par exemple);
- des nuages sémantiques de tags distinctifs de ces conversations ;
- des informations sur les correspondants 2-4 telles que l'âge ou le lien social (membre de la famille, collègue de travail, client par exemple), le service auquel un client est abonné (dans le cas d'un centre d'appels par exemple) ;
- des informations descriptives des interactions de l'utilisateur avec chaque correspondant telles que, par exemple, le nombre de conversations par correspondant par semaine, la durée moyenne des conversations par correspondant, l'horaire des conversations par correspondant (pendant les heures du travail, le soir, le weekend par exemple), la fréquence d'envoi de messages lors d'une conversation (réactivité) avec un certain correspondant, le type d'interactions généralement entrepris avec chaque correspondant (partage de photos, envoi fréquent d'émoticône, conversation vidéo, participation à des jeux en ligne par exemple).

Avantageusement, les métadonnées 105 sont automatiquement enrichies à l'aide des analyses sémantiques qui leurs sont transmises depuis l'analyseur sémantique 101.

Par ailleurs, les métadonnées 105 permettent au calculateur 104 de proximité sémantique d'effectuer une analyse conversationnelle des conversations de l'utilisateur 1 avec ses correspondants 2-4.

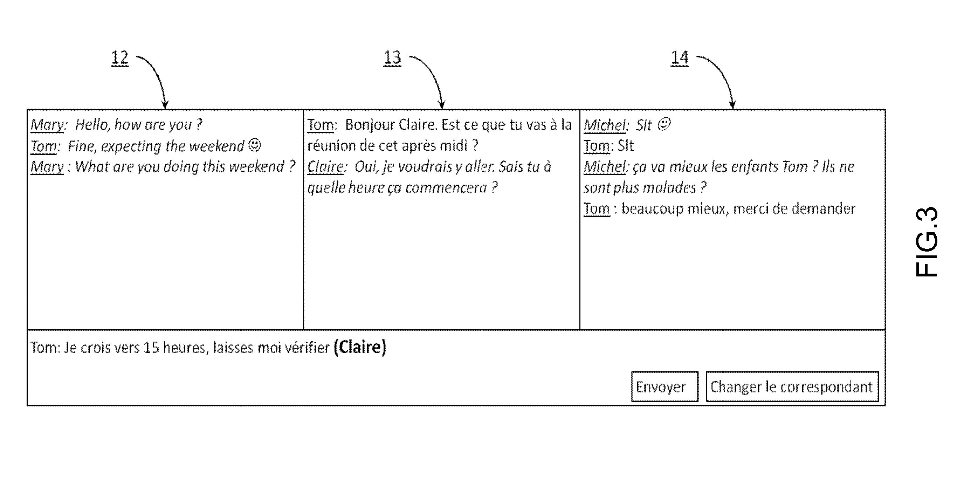

Dans un mode de réalisation, dit environnement mono-fenêtre, illustré sur la figure 3, les fenêtres de conversation 12-14 sont regroupées dans une seule fenêtre. En effet, dans un environnement mono-fenêtre, l'utilisateur 1 peut interagir avec plus d'un correspondant via une même fenêtre de conversation. Dans cet exemple illustratif, l'utilisateur 1 (Tom) interagit avec trois correspondants 2-4, respectivement Mary, Claire, et Michel. Dans ce cas, le système 100 se charge
- de déterminer le correspondant 2-4 auquel est destiné le message à envoyer « *Je crois vers 15 heures, laisses moi vérifier »* ;
- d'afficher à l'utilisateur 1 le correspondant 2-4 estimé. Dans cet exemple, le système estime que ce message est destiné au correspondant 2 (à savoir, « Claire ») ; et
- dans le cas où l'utilisateur 1 n'a pas modifié le correspondant 2 (Claire) estimé par le système 100, en appuyant sur le bouton « changer le correspondant », le message est automatiquement transmis à Claire et apparait dans la fenêtre de conversation 13.

En variante, l'utilisateur 1 peut interagir avec ses correspondant 2-4 via des fenêtres de conversation 12-14 séparés (dit, environnement multi-fenêtre).

A ce stade, il est à noter que la description ci-dessus, faite en référence à une interaction utilisateur consistant en un envoi d'un message, est aussi valable pour toute autre type d'interaction telle que l'envoi d'un objet multimédia (une photo, un émoticône, ou plus généralement un fichier) ou le lancement d'une commande (lancer un jeu en ligne, partager des photos, démarrer un conversation vidéo, établir un appel par exemple). En effet, en fonction de l'analyse faite par l'analyseur sémantique 101 de l'interaction utilisateur et des métadonnées 105, le système 100 est apte à estimer le correspondant 2-4 auquel est destinée cette interaction.

A titre d'exemple illustratif, si l'utilisateur 1 souhaite
- changer le fond de la fenêtre de conversation 13 vers un fond proposé par l'application cliente et décrété émotionnel ;
- lancer un jeu en ligne à partir de la fenêtre de conversation 13 ; ou
- envoyer un émoticône proposé par l'application cliente et décrété affectif ;
alors que le correspondant 3 - qui est engagé dans cette conversation - est un collègue de travail, le système 100 affiche à l'utilisateur 1 un avertissement et/ou une notification (par exemple « êtes vous sûr du correspondant ? »).

Le procédé et système qui viennent d'être décrits présentent un certain nombre d'avantages. Ils permettent en effet
- dans un mode de réalisation, de condenser, et donc de réduire le nombre des fenêtres de conversation (figure 3);
- de libérer l'utilisateur 1 de la charge de la gestion d'une pluralité de fenêtres de conversation 12-14 ;
- d'éviter d'envoyer un message personnel à un contact professionnel, et inversement.

Avantageusement, le système 100 peut être introduit en extension à la plupart des applications clientes des messageries instantanées, et activé/désactivé par l'utilisateur 1 à tout moment.

Le système 100 trouve notamment application dans tout moyen de messagerie instantanée à usage privé ou professionnel (dans les espaces de travail collaboratif ou d'apprentissage à distance, ou les centre d'appels par exemple).

## Revendications

1. Procédé de gestion des interactions d'un utilisateur (1) avec au moins deux correspondants (2-4), via au moins deux fenêtres de conversation (12-14) d'une application cliente à une messagerie instantanée, ce procédé comprenant
- une étape de récupération d'un message (121 , 131, 141) à envoyer, par l'utilisateur (1), depuis une fenêtre de conversation (12-14);
- une étape d'analyse sémantique du message (121, 131, 141) récupéré ;
- une étape de calcul des distances sémantiques séparant le message (121, 131, 141) analysé, respectivement, des conversations de l'utilisateur (1) avec ses correspondants (2-4) ;
- une étape de détermination d'un correspondant (2-4) estimé le correspondant auquel est destiné le message (121, 131, 141) analysé.

2. Procédé selon la revendication 1, **caractérisé en ce que** l'étape d'analyse sémantique comprend une étude structurale et une étude sémantique du message (121,131, 141) à envoyer.

3. Procédé selon l'une quelconque des revendications précédentes, **caractérisé en ce qu'**il comprend en outre une étape d'analyse conversationnelle des conversations de l'utilisateur (1) avec ses correspondants (2-4).

4. Procédé selon l'une quelconque des revendications précédentes, **caractérisé en ce qu'**il comprend en outre une étape d'envoi du message (121 , 131, 141) vers le correspondant déterminé (2-4) ou un correspondant (2-4) choisi par l'utilisateur (1).

5. Système (100) de gestion des interactions d'un utilisateur (1) avec au moins deux correspondants (2-4), via au moins deux fenêtres de conversation (12-14) d'une application cliente à une messagerie instantanée, ce système comprenant :
- un analyseur sémantique (101) configuré pour récupérer un message (121, 131, 141) à envoyer, par l'utilisateur (1), depuis une fenêtre de conversation (12-14), et pour en effectuer une analyse sémantique ;
- un calculateur (104) de proximité sémantique configuré pour calculer les distances sémantiques séparant le message (121, 131, 141) analysé, respectivement, des conversations de l'utilisateur (1) avec ses correspondants (2-4), et pour sélectionner un correspondant estimé le correspondant auquel est destiné le message (121, 131, 141) analysé.

6. Système selon la revendication 5, **caractérisé en ce qu'**il comprend en outre un gestionnaire (106) de messages configuré pour router le message (121, 131, 141) au correspondant (2-4) sélectionné par le calculateur (104) de proximité sémantique ou à un correspondant (2-4) choisi par l'utilisateur (1).

7. Système selon la revendication 6, **caractérisé en ce qu'**il comprend en outre un module de feedback (108) agencé pour permettre l'apprentissage automatique, par l'analyseur automatique (104), des choix de l'utilisateur (1).

8. Produit programme d'ordinateur implémenté sur un support mémoire, susceptible d'être mis en oeuvre au sein d'une unité de traitement informatique et comprenant des instructions pour la mise en oeuvre d'un procédé selon l'une des revendications 1 à 4.
